# EUROPEAN PATENT SPECIFICATION

(11) **EP 2 190 173 B1**
(45) Date of publication and mention of the grant of the patent: **03.08.2016**
(21) Application number: 08020293.0
(22) Date of filing: 21.11.2008
(51) Int. Cl.: H04M 1/725

(54) **Replaceable graphical user interface for mobile communication device**
Austauschbare graphische Benutzeroberfläche für mobile Kommunikationsvorrichtungen
Interface d'utilisateur graphique remplaçable pour dispositif de communication mobile

(43) Date of publication of application: 26.05.2010
(73) Proprietor: Vodafone Holding GmbH, 40213 Düsseldorf (DE)
(72) Inventor: Weisscher, Alard, 6231 LG Meerssen (NL); Eschenauer, Laurent, 4102 Ougrée (BE)
(74) Representative: Jostarndt Patentanwalts-AG

(56) References cited:
- EP-A- 1 901 535
- WO-A-2005/022375
- US-A1- 2007 150 617
- US-A1- 2007 208 880

## Description

### Technical Field

The present invention is related to a mobile communication device with replaceable or changeable graphical user interfaces. In particular, the present invention is related to a mobile communication device according to claim 1. The present invention is also related to a server and a system for replacing the graphical user interface of a mobile communication device.

### Background of the invention

When today a mobile telephone is released on the market its graphical user interface i.e. the software part of the telephone user interface is a fixed component usually designed by a manufacturer and/or the network provider and programmed in the manufacturing environment of the mobile telephone. Every mobile telephone user interface is inevitably a compromise given the fact it needs to serve a huge audience with very different needs. This means menus are filled with applications which some users never use, the whole display is showing inappropriate elements and for specific information the user needs to open a browser to find this information. Dependant on how many submenus the user has to open this may be a very inefficient process in some cases.

Such menus may differ very greatly in terms of their structure, the number of parameters displayed and the difficulty of using them. The different desires, demands and capabilities of the users mean that there is generally not a single menu which meets the demands of all potential users. In practice, by way of example, a particular menu may be far too complicated and incomprehensible for a first, technically inexperienced user, yet may still be too simple for a second, technically experienced user, because the latter desires further refined setting options or would like to use further services offered.

Even for a single person the most frequently used functionalities may vary throughout a day and a week depending on the context of the daily life of the user. At work, usually calling numbers or caller lists as well as business e-mail functionalities are most important. At home, the same user may never access his business e-mail but rather use a camera and a photo gallery to show photos to visitors. At leisure times, for example on a festival the most important things to this user are latest updates about the festival and notifications when a favourite band starts playing. During holidays a personal blog may be the most frequently accessed service.

The graphical user interface of today's mobile telephones can only be adapted to a very little extent to fit to the personal context of the user let alone to a varying context. At most the user has the possibility in some cases to make some accommodations. E.g. he may configure some aspects of the graphical user interface such as the language and the date format. He may also change the look and feel of the graphical user interface by selecting a template or by "skinning" the mobile telephone, i.e. changing the appearance of elements shown on the display. In some cases, the user may also install additional applications on the telephone.

From US 2005/0289227 A1 a method for editing a new interface of a portable device by using a browser is known. According to the known method a new interface of the portable device is edited with texts and graphics provided on a website associated with a server. The user of the portable device connects to the internet and logs in to a website associated with a server. On the server he may edit text or graphs a window or a picture frame of a new user interface. After the editing is finished the user downloads the information associated with the new user interface into a specific folder of the portable electronic device to replace the original graphical user interface of the device. In this way a personal style of the user interface can be created.

EP 1 901 535 discloses a system for converting a skin of a portable terminal. Skins are screens including an image, an item's location and size, a key map and a list or a pop-up. The skins are classified into a menu skin and item skins constituting the menu skin according to the type of screen provided to the user. The skins can be replaced by new skins, which are referred to as selections skins in the document. In order to convert a skin, the user can decide to download a selection skin from a content server using the portable terminal, and, if the user has not decided to download a selection skin, the user can designate a selection skin stored in the memory of the portable terminal. Moreover, the user can modify or correct the characteristics of the selection skin.

Taking this as a starting point there still remains a desire to provide a user the possibility to even further adapt the graphical user interface of a mobile communication device according to his needs and preferences.

### Brief description of the invention

The present invention suggests a mobile communication device with a changeable user interface. In particular, the present invention suggests a mobile communication device comprising an operating system for the mobile communication device, a radio interface for connecting to a wireless network, a display on which a graphical user interface is displayed to enable the user to operate the mobile communication device according to the operating system and a local storage where the data files associated with the graphical user interface are stored. The local storage permits the storage of a plurality of graphical user interfaces and means for managing the graphical user interface such that the user can select one out of the plurality of stored graphical user interfaces.

According to an embodiment of the inventive mobile communication the operating system of the mobile telephone interacts with the graphical user interface such that the user controls the mobile telephone through the selected graphical user interface.

In advantageous embodiment of the invention each one of the graphical user interface offers a menu to select another one of the plurality of graphical user interface.

In a useful embodiment of the inventive mobile communication device means for rendering the graphical user interface are provided. The means for rendering can associate functionalities and/or services with elements of the graphical user interface. The means for rendering provide a considerable flexibility for the user to adapt the graphical user interface.

The mobile communication device comprises dynamic means for rendering the graphical user interface can perform an automatic rendering of the graphical user interface. The dynamic means for rendering of the graphical user interface can monitor and store the user behavior related to functionalities of the mobile communication device. It may be convenient if the automatic rendering of the graphical user interface is based on the stored user behavior such that functionalities of the mobile communication device presented by the graphical user interface are putted in the foreground in accordance with the stored user behavior related to the functionalities of the mobile communication device. The functionalities of the mobile communication device are selected out of the group business e-mail functionality, private e-mail functionality, event information, personal blog, telephone call, SMS messaging, MMS messaging, address books, calendar. The dynamic means for rendering the graphical user interface can perform an automatic rendering of the graphical user interface as a function of day time.

In a further development the dynamic means for rendering the graphical user interface perform an automatic rendering of the graphical user interface as a function of the calendar day. The dynamic means for rendering support the user in adapting the graphical user interface. It helps him to find the most efficient graphical user interface for his needs.

In yet another embodiment of the present invention the mobile communication device is provided with a manager means enabling a user to download a graphical user interface from a remote device. The manager means can control the storage of the downloaded graphical user interface in the local storage. In cases where the graphical user interfaces stored in the local storage do not meet the needs of a specific user the manager means allow installing another graphical user interface from a remote device.

According to a second aspect the present invention suggests a server providing a website on which a selection of graphical user interfaces are displayed, wherein a user can select a specific graphical user interface for download out of a plurality of graphical user interfaces, wherein the server comprises a download manager which executes the download of the data files associated with a selected graphical user interface to a receiving device. The server is a remote device from which graphical user interfaces can be downloaded if the graphical user interfaces stored on the mobile communication device cannot satisfy the needs of a specific user. The website of the server can be provided with a gallery of graphical user interfaces from which a specific graphical user interface is selectable by a user. Since the storage capacity of the server is much larger than the local storage of the mobile communication device it is possible to offer the user a very large variety of graphical user interfaces for download.

Finally, the present invention suggests a system comprising a mobile communication device according to the invention and a server according to the invention.

Further advantages of the present invention will become apparent when reading the detailed description appended with drawings.

### Brief description of the drawing

In the drawing embodiments of the present invention are illustrated. It shows:
- Figure 1: a top view on a mobile telephone;
- Figure 2: an illustration of a detailed view of the display of the mobile telephone of figure 1; and
- Figure 3: an architecture of a system embodying the present invention.

In the drawing identical or similar elements are labelled with the same reference numbers.

### Detailed description

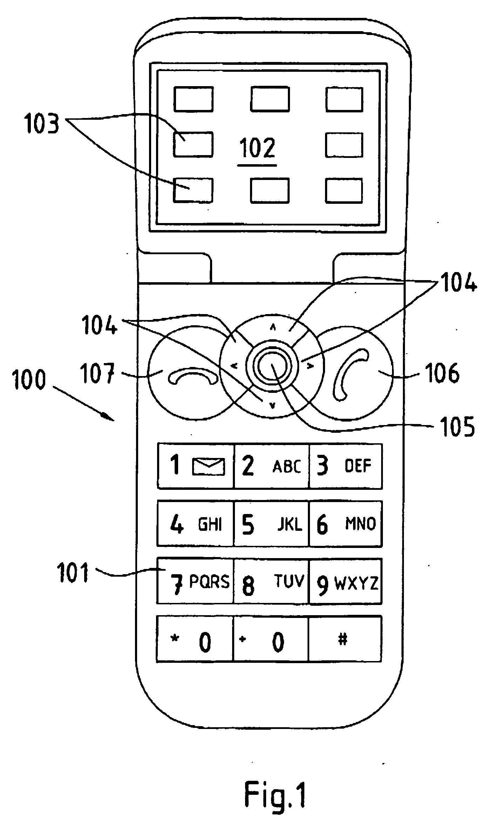

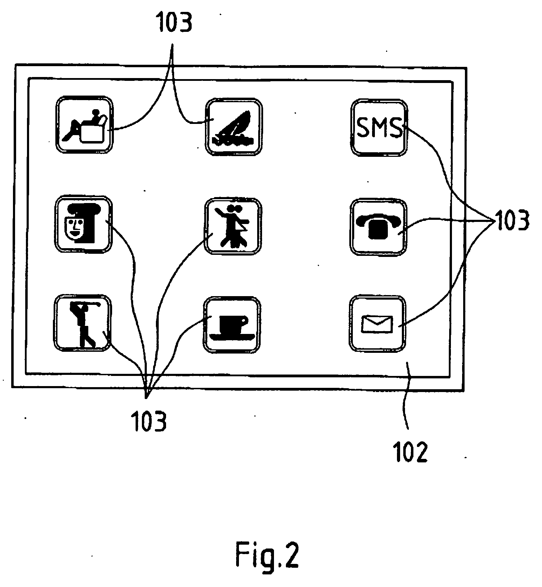

Figure 1 shows a schematical front view of mobile telephone which is labelled as a whole with the reference number 100. In the lower part of the front side of the mobile telephone 100 there is a key pad 101 enabling a user to input telephone numbers and text. In the upper portion of the front side of the mobile telephone 100 there is a display 102 for displaying dialed telephone numbers as well as telephone numbers of callers. The display 102 is also utilized to display the text of SMS messages and the visual contents of MMS messages. The display 102 is also used to display icons 103 enabling the user to access in a quick and convenient way certain functionalities of the mobile telephone such as SMS messaging, MMS messaging, e-mails and address books to name only a few examples. This aspect will be described with reference to figure 2 showing the display 102 in greater detail. In order to select a certain functionality the user moves a cursor (not shown in figure 1) onto an icon 103 displayed on the screen 102 by cursor buttons 104 and pushes a select button 105 to execute the selection. The mobile telephone 100 further includes a button 106 to initiate a telephone call and a button 107 to terminate the telephone call.

In connection with the present invention the mobile telephone 100 is only a representative of different types of mobile communication devices such as personal data assistants (PDA). For the sake of simplicity, however, we refer only to a mobile telephone but other mobile communication devices may take the place of the mobile telephone in connection with the present invention. The present invention is not limited to mobile telephones and includes any other types of mobile communication devices having a graphical user interface.

The mobile telephone is wirelessly connected to a PLMN (Public Land Mobile Network) via a radio access network. The PLMN is the core network of the mobile communication system operated by a mobile network operator and may be configured according to the GSM standard or according to the UMTS standard, for example. The radio access network may be configured as a GERAN (GSM Edge Radio Access Network) according to the GSM standard or as an UTRAN (Universal Terrestrial Radio Access Network) according to the UMTS standard, for example. The UMTS standard permits the user to connect wirelessly to the internet at a comparable data rate as with DSL connections.

In figure 2 the display 102 of the mobile telephone 100 shown in figure 1 is shown in greater detail. In figure 2 the different kinds of icons 103 and the functionality which is associated with each of these icons 103 is visible. In the example shown in figure 2 the functionalities are telephone calls, email editing and sending, SMS messaging, appointments with friends, sport events, cultural events and other items which are important for the user of the mobile telephone 100. The described functionalities are only meant as illustrative examples and shall not be construed to limit the scope of the present invention.

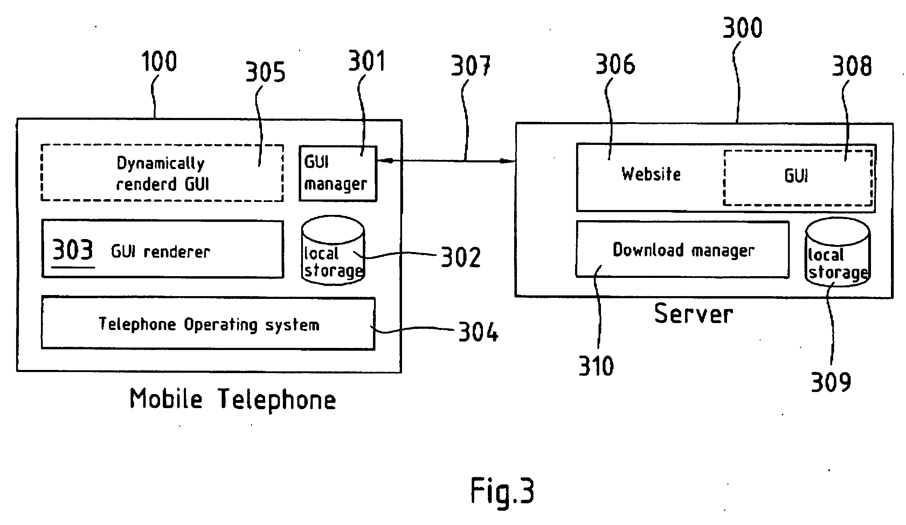

Figure 3 shows a high level architecture of a system which is capable to implement the present invention. The system comprises the mobile telephone 100 and a server 300. The mobile telephone 100 includes a graphical user interface manager 301 (graphical user interface manager) and a local storage 302. In the local storage 302 a plurality of different kinds of graphical user interfaces are stored. The size of the local storage 302 is dimensioned to allow storing a plurality of graphical user interfaces to make them easily and quickly accessible by simply selecting one of them through a menu. The graphical user interface manager 301 enables the user to select one of the graphical user interfaces which are available on the local storage 302 such that the operating system of the mobile telephone 100 presents the selected graphical user interface to the user. The graphical user interface manager offers the user the possibility to replace the graphical user interface which is installed on his mobile phone with another one displaying different data and having a different flow of menus i.e. the user may change the sequence of screens and how to navigate from one screen to another one. This is a considerable advantage over the prior art because designing and building a mobile telephone user interface is at present very difficult and complex such that it is reserved to specialized designers and engineers.

In an embodiment of the present invention each of the graphical user interfaces stored in the local storage displays a menu enabling a user to manually switch to another graphical user interface.

In another embodiment of the present invention the user can manually switch to another user interface using a hardware switch or button provided on the mobile telephone.

The local storage 302 is a memory device inside the telephone, a memory included in the subscriber identity module of the mobile telephone or an additional memory card that can be inserted into the mobile telephone. In spite of the new flexibility that the invention offers there may still be a situation that the plurality of graphical user interface stored in the local storage 302 does still not meet all needs of a specific user. Therefore, the graphical user interface manager 301 also enables the user to browse a remote storage for new graphical user interfaces to download and install on the mobile telephone 100.

The mobile telephone 100 includes a graphical user interface renderer for rendering the selected graphical user interface. The graphical user interface renderer 303 links data to display with native or remote data sources and links the user interactions with native or remote action such as a telephone call, send SMS messages, post message to a blog etc. The graphical user interface renderer 303 associates functionalities of the mobile telephone 100 or of remote services with icons 103 represented on the display 102. In this way the graphical user interface renderer 303 creates a large versatility of the mobile telephone 100.

The mobile telephone 100 includes a telephone operating system 304 which is controlled by the user through the graphical user interface currently selected by the graphical user interface manager 301. The telephone operating system 304 comprises all hard- and software to enable native telephone functionalities e.g. setting up and receiving telephone calls and email, SMS (short message service) and MMS (multimedia message service) communication to name only a few.

The mobile telephone 100 according to the present invention is provided with a dynamic graphical user interface renderer 305.

In an embodiment of the invention the dynamic graphical user interface renderer 305 provides for an automatic change of the graphical user interface as function of the day time, day of the week and whether the user is on vacation besides the manual selection of the user. During the day time of normal working days the mobile telephone presents a "business" graphical user interface putting functionalities to the foreground which are predominantly used during the working time of the user. After the normal working hours the mobile telephone switches to a "leisure" graphical user interface in which other functionalities are in the foreground which are mainly used by the user in his leisure time. Similar changes occur between normal working days on the one hand and weekends and vacation on the other hand. The changes are controlled by the mobile phone 100 and do not require any user interaction to occur.

In another embodiment the graphical user interface is replaced upon a user input and at the same time the graphical user interface is changed automatically as a function of daytime and calendar day.

In yet another embodiment of the invention the dynamic graphical user interface renderer 305 monitors the user behaviour over a relatively long period of time and stores it. The ascertained result relating to the user behaviour is used to offer to the user as preferences in the displayed menu such menu items the user has predominately chosen in the past according to the user behaviour ascertained. The dynamic graphical user interface renderer 305 shows upon request an adapted menu and waits for the confirmation of the adapted menu by the user. If the user does so the graphical user interface renderer stores the adapted menu in the local storage 302.

In order to access an even enhanced choice of graphical user interfaces the user can connect to a website 306 on the remote server 300. A data communication link 307 between the mobile telephone 100 and the server 300 is established wirelessly via conventional data communication services offered by service providers. The website 306 enables the user to remotely configure the graphical user interface of his mobile telephone by browsing a gallery 308. The data files associated with each one of the graphical user interfaces presented in the graphical user interface gallery 308 are stored in the local storage 309 of the server 300. Upon the selection of a specific graphical user interface the graphical user interface manager 301 of the mobile telephone 100 interfaces with a download manager 310. The download manager 310 is an application running on the server. The download manager 310 accesses the data file associated with the selected graphical user interface and transfers it via the data communication link 307 to the graphical user interface manager 301. As soon as the data file associated with the selected graphical user interface has been downloaded completely, it is stored in the local storage 302 of the mobile telephone 100. The server 300 and the mobile telephone 100 cooperate to form a system enabling a user to replace the graphical user interface of the mobile telephone 100.

The invention permits to have different types of graphical user interfaces at hand e.g. a simplified graphical user interface when the mobile telephone is borrowed to a child or to another person who is not skilled in operating modern communication devices.

While the invention has been illustrated and described in detail in the drawings and foregoing description, such illustration and description are to be considered illustrative or exemplary and not restrictive; the invention is not limited to the disclosed embodiments. Particularly, the invention is not limited to a download of an application or program code to the local storage 302. A person skilled in the art recognises that other data can be downloaded to the local storage 302 in the same way as it has been described before in connection with the download of a program code of an application. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### List of reference numerals

- 100: mobile telephone
- 101: key pad
- 102: display
- 103: icon
- 104: cursor buttons
- 105: select button
- 106,107: buttons

- 300: server
- 301: graphical user interface manager
- 302: local storage
- 303: graphical user interface renderer
- 304: telephone operating system
- 305: dynamic graphical user interface renderer
- 306: web site
- 307: data communication link
- 308: graphical user interface gallery
- 309: local storage
- 310: download manager

## Claims

1. Mobile communication device comprising
an operating system (304) for the mobile communication device (100),
a radio interface for connecting to a wireless network,
a display (102) on which a graphical user interface is displayed to enable the user to operate the mobile communication device according to the operating system and
a local storage (302) where the data files associated with the graphical user interface are stored wherein the local storage (302) permits the storage of a plurality of user interfaces and
means for managing the graphical user interface such that the user can select one out of the plurality of stored graphical user interfaces **characterized in that** a dynamic means (305) for rendering the graphical user interface is comprised, wherein the dynamic means (305) for automatic rendering of the graphical user interface are arranged to monitor and store the user behavior related to functionalities of the mobile communication device said means performing an automatic change of the graphical user interface based on the plurality of stored graphical user interfaces and based on the stored user behavior such that the functionalities of the mobile communication device presented by the graphical user interface are putted in the foreground in accordance with the stored user behavior related to the functionalities of the mobile communication device, wherein the functionalities are selected out of the group business e-mail functionality, private e-mail functionality, event information, personal blog, telephone call, SMS messaging, MMS messaging, address books, calendar.

2. Mobile communication device according to claim 1, wherein the operating system of the mobile communication device (100) interacts with the graphical user interface such that the user controls the mobile communication device (100) through the selected graphical user interface.

3. Mobile communication device according to claim 1, wherein each one of the graphical user interface offers a menu to select another one of the plurality of graphical user interface.

4. Mobile communication device according to claim 1, wherein means for rendering (303) the graphical user interface are provided.

5. Mobile communication device according to claim 4, wherein means for rendering (303) associate functionalities and/or services with elements of the graphical user interface.

6. Mobile communication device according to claim 1, wherein the dynamic means (305) for rendering the graphical user interface perform an automatic rendering of the graphical user interface as a function of day time.

7. Mobile communication device according to claim 1, wherein the dynamic means (305) for rendering the graphical user interface perform an automatic rendering of the graphical user interface as a function of the calendar day.

8. Mobile communication device according to claim 6, wherein the graphical user interface is replaced upon a user input and at the same time the graphical user interface is changed automatically as a function of daytime.

9. Mobile communication device according to claim 7, wherein the graphical user interface is replaced upon a user input and at the same time the graphical user interface is changed automatically as a function of calendar day.

10. Mobile communication device according to one or several of the preceding claims, wherein a manager means (301) is provided enabling a user to download a graphical user interface from a remote device (300).

11. Mobile communication device according to claim 10, wherein the manager means (301) controls the storage of the downloaded graphical user interface in the local storage (302).

12. System comprising a mobile communication device (100) according to one or several of the preceding claims and a server (300), the server providing a website (306) on which a selection of graphical user interfaces are displayed, wherein a user can select a specific graphical user interface for download out of a plurality of graphical user interfaces, wherein the server (300) comprises a download manager (310) which executes the download of the data files associated with a selected graphical user interface to a receiving.

13. System according to claim 12, wherein the website provides a gallery (308) of graphical user interfaces from which a specific graphical user interface is selectable by a user.

## Patentansprüche

1. Mobilkommunikationsvorrichtung, die umfasst:
ein Betriebssystem (304) für die Mobilkommunikationsvorrichtung (100),
eine Funkschnittstelle zum Verbinden mit einem drahtlosen Netz,
eine Anzeige (102), auf der eine graphische Nutzerschnittstelle angezeigt wird, um zu ermöglichen, dass der Nutzer die Mobilkommunikationsvorrichtung in Übereinstimmung mit dem Betriebssystem betreibt, und
einen lokalen Speicher (302), wo die der graphischen Nutzerschnittstelle zugeordneten Datendateien gespeichert sind, wobei der lokale Speicher (302) die Speicherung mehrerer Nutzerschnittstellen zulässt, und
Mittel, um die graphische Nutzerschnittstelle in der Weise zu managen, dass der Nutzer aus den mehreren gespeicherten graphischen Nutzerschnittstellen eine auswählen kann, **dadurch gekennzeichnet, dass** ein dynamisches Mittel (305) zum Rendern der graphischen Nutzerschnittstelle enthalten ist, wobei die dynamischen Mittel (305) zum automatischen Rendern der graphischen Nutzerschnittstelle zum Überwachen und Speichern des Nutzerverhaltens in Bezug auf Funktionalitäten der Mobilkommunikationsvorrichtung angeordnet sind, wobei die Mittel auf der Grundlage der mehreren gespeicherten graphischen Nutzerschnittstellen und auf der Grundlage des Nutzerverhaltens eine automatische Änderung der graphischen Nutzerschnittstelle in der Weise ausführen, dass die durch die graphische Nutzerschnittstelle dargestellten Funktionalitäten der Mobilkommunikationsvorrichtung in Übereinstimmung mit dem gespeicherten Nutzerverhalten in Bezug auf die Funktionalitäten der Mobilkommunikationsvorrichtung in den Vordergrund gebracht werden, wobei die Funktionalitäten aus der Gruppe Geschäfts-E-Mail-Funktionalität, Privat-E-Mail-Funktionalität, Ereignisinformationen, persönlicher Blog, Telefonanruf, SMS-Mitteilungsübermittlung, MMS- Mitteilungsübermittlung, Adressbücher, Kalender ausgewählt werden.

2. Mobilkommunikationsvorrichtung nach Anspruch 1, wobei das Betriebssystem der Mobilkommunikationsvorrichtung (100) mit der graphischen Nutzerschnittstelle in der Weise zusammenwirkt, dass der Nutzer die Mobilkommunikationsvorrichtung (100) über die ausgewählte graphische Nutzerschnittstelle steuert.

3. Mobilkommunikationsvorrichtung nach Anspruch 1, wobei jede der graphischen Nutzerschnittstellen ein Menü zum Auswählen einer anderen der mehreren graphischen Nutzerschnittstellen bietet.

4. Mobilkommunikationsvorrichtung nach Anspruch 1, wobei Mittel zum Rendern (303) der graphischen Nutzerschnittstelle vorgesehen sind.

5. Mobilkommunikationsvorrichtung nach Anspruch 4, wobei die Mittel zum Rendern (303) Funktionalitäten und / oder Dienste zu Elementen der graphischen Nutzerschnittstelle zuordnen.

6. Mobilkommunikationsvorrichtung nach Anspruch 1, wobei die dynamischen Mittel (305) zum Rendern der graphischen Nutzerschnittstelle ein automatisches Rendern der graphischen Nutzerschnittstelle in Anhängigkeit von der Tageszeit ausführen.

7. Mobilkommunikationsvorrichtung nach Anspruch 1, wobei die dynamischen Mittel (305) zum Rendern der graphischen Nutzerschnittstelle ein automatisches Rendern der graphischen Nutzerschnittstelle in Anhängigkeit von dem Kalendertag ausführen.

8. Mobilkommunikationsvorrichtung nach Anspruch 6, wobei die graphische Nutzerschnittstelle bei einer Nutzereingabe ersetzt wird und die graphische Nutzerschnittstelle gleichzeitig automatisch in Abhängigkeit von der Tageszeit geändert wird.

9. Mobilkommunikationsvorrichtung nach Anspruch 7, wobei die graphische Nutzerschnittstelle bei einer Nutzereingabe ersetzt wird und die graphische Nutzerschnittstelle gleichzeitig automatisch in Abhängigkeit von dem Kalendertag geändert wird.

10. Mobilkommunikationsvorrichtung nach einem oder mehreren der vorhergehenden Ansprüche, wobei ein Managermittel (301) vorgesehen ist, das ermöglicht, dass ein Nutzer eine graphische Nutzerschnittstelle von einer fernen Vorrichtung (300) herunterlädt.

11. Mobilkommunikationsvorrichtung nach Anspruch 10, wobei das Managermittel (301) die Speicherung der heruntergeladenen graphischen Nutzerschnittstelle in dem lokalen Speicher (302) steuert.

12. System, das eine Mobilkommunikationsvorrichtung (100) nach einem oder nach mehreren der vorhergehenden Ansprüche und einen Server (300) umfasst, wobei der Server eine Website (306) bereitstellt, auf der eine Auswahl graphischer Nutzerschnittstellen angezeigt werden, wobei ein Nutzer aus mehreren graphischen Nutzerschnittstellen eine spezifische graphische Nutzerschnittstelle zum Herunterladen auswählen kann, wobei der Server (300) einen Downloadmanager (310) umfasst, der den Download der einer ausgewählten graphischen Nutzerschnittstelle zugeordneten Datendateien zu einem Empfang ausführt.

13. System nach Anspruch 12, wobei die Website eine Galerie (308) graphischer Nutzerschnittstellen bereitstellt, aus denen eine spezifische graphische Nutzerschnittstelle durch einen Nutzer wählbar ist.

## Revendications

1. Dispositif de communication mobile comprenant
un système d'exploitation (304) pour le dispositif de communication mobile (100), une interface radio pour la connexion à un réseau sans fil,
un écran (102) sur lequel une interface utilisateur graphique est affichée pour permettre à l'utilisateur de faire fonctionner le dispositif de communication mobile selon le système d'exploitation et
une mémoire locale (302) dans laquelle les fichiers de données associés à l'interface utilisateur graphique sont conservés en mémoire, dans lequel la mémoire locale (302) permet de conserver en mémoire une pluralité d'interfaces utilisateur et
un moyen pour administrer l'interface utilisateur graphique de telle façon que l'utilisateur puisse sélectionner l'une parmi la pluralité d'interfaces utilisateur graphiques conservées en mémoire, **caractérisé en ce qu'**un moyen dynamique (305) pour le rendu de l'interface utilisateur graphique est compris, dans lequel le moyen dynamique (305) pour le rendu automatique de l'interface utilisateur graphique est agencé pour surveiller et conserver en mémoire l'attitude de l'utilisateur par rapport aux fonctionnalités du dispositif de communication mobile, ledit moyen effectuant une modification automatique de l'interface utilisateur graphique en se basant sur la pluralité d'interfaces utilisateur graphiques conservées en mémoire et en se basant sur le comportement d'utilisateur conservé en mémoire de telle façon que les fonctionnalités du dispositif de communication mobile présentées par l'interface utilisateur graphique soient mises en avant en fonction du comportement d'utilisateur conservé en mémoire par rapport aux fonctionnalités du dispositif de communication mobile, dans lequel les fonctionnalités sont sélectionnées parmi la fonctionnalité d'e-mail d'activités de groupe, la fonctionnalité d'e-mail privé, l'information d'événement, le blog personnel, l'appel téléphonique, la messagerie SMS, la messagerie MMS, les carnets d'adresse, le calendrier.

2. Dispositif de communication mobile selon la revendication 1, dans lequel le système d'exploitation du dispositif de communication mobile (100) interagit avec l'interface utilisateur graphique de telle façon que l'utilisateur commande le dispositif de communication mobile (100) par l'interface utilisateur graphique sélectionnée.

3. Dispositif de communication mobile selon la revendication 1, dans lequel chacune des interfaces utilisateur graphiques offre un menu pour sélectionner une autre de la pluralité d'interfaces utilisateur graphiques.

4. Dispositif de communication mobile selon la revendication 1, dans lequel un moyen de rendu (303) de l'interface utilisateur graphique est prévu.

5. Dispositif de communication mobile selon la revendication 4, dans lequel le moyen de rendu (303) associe des fonctionnalités et/ou des services à des éléments de l'interface utilisateur graphique.

6. Dispositif de communication mobile selon la revendication 1, dans lequel le moyen dynamique (305) pour le rendu de l'interface utilisateur graphique effectue un rendu automatique de l'interface utilisateur graphique en fonction du moment de la journée.

7. Dispositif de communication mobile selon la revendication 1, dans lequel le moyen dynamique (305) pour le rendu de l'interface utilisateur graphique effectue un rendu automatique de l'interface utilisateur graphique en fonction du jour calendaire.

8. Dispositif de communication mobile selon la revendication 6, dans lequel l'interface utilisateur graphique est remplacée sur une saisie de l'utilisateur et au même moment, l'interface utilisateur graphique est modifiée automatiquement en fonction du moment de la journée.

9. Dispositif de communication mobile selon la revendication 7, dans lequel l'interface utilisateur graphique est remplacée sur une saisie de l'utilisateur et au même moment, l'interface utilisateur graphique est modifiée automatiquement en fonction du jour calendaire.

10. Dispositif de communication mobile selon l'une ou plusieurs des revendications précédentes, dans lequel un moyen d'administrateur (301) est prévu qui permet à un utilisateur de télécharger une interface utilisateur graphique à partir d'un dispositif à distance (300).

11. Dispositif de communication mobile selon la revendication 10, dans lequel le moyen d'administrateur (301) commande la conservation en mémoire de l'interface utilisateur graphique téléchargée dans la mémoire locale (302).

12. Système comprenant un dispositif de communication mobile (100) selon l'une ou plusieurs des revendications précédentes et serveur (300), le serveur fournissant un site web (306) sur lequel une sélection d'interfaces utilisateur graphiques est affichée, dans lequel un utilisateur peut sélectionner une interface utilisateur graphique spécifique pour la télécharger parmi une pluralité d'interfaces utilisateur graphiques, dans lequel le serveur (300) comprend un administrateur de téléchargement (310) qui effectue le téléchargement des fichiers de données associés à une interface utilisateur graphique sélectionnée vers une réception.

13. Système selon la revendication 12, dans lequel le site web fournit une galerie (308) d'interfaces utilisateur graphiques à partir de laquelle une interface utilisateur graphique spécifique peut être sélectionnée par un utilisateur.
